# EUROPEAN PATENT SPECIFICATION

(11) **EP 2 573 681 B1**
(45) Date of publication and mention of the grant of the patent: **14.12.2016**
(21) Application number: 12158170.6
(22) Date of filing: 06.03.2012
(51) Int. Cl.: G06F 13/40

(54) **Electric device with multiple data connection ports**
Elektrische Vorrichtung mit mehreren Datenverbindungsanschlüssen
Dispositif électrique avec multiples ports de connexion de données

(30) Priority: 20.09.2011 TW 100133746
(43) Date of publication of application: 27.03.2013
(73) Proprietor: Acer Incorporated, New Taipei City 221 (TW)
(72) Inventor: Lin, Yu-Ting, Taiwan, ROC New Taipei City 221, (TW); Hsieh, Ho-Kuang, Taiwan, ROC New Taipei City 221, (TW)
(74) Representative: Chamberlain, Alan James

(56) References cited:
- US-A- 5 983 308
- US-A1- 2004 019 732
- US-A1- 2006 227 759

## Description

### BACKGROUND OF THE INVENTION

### Field of the Invention

The present invention relates to an electric device, more particularly, an electric device having multiple data connection ports which can flexibly be connected with each other.

### Description of Related Art

On account of the maturity of computer self-assembling technique, a computer can be detached and divided into several independent peripheral devices. Each peripheral device has its own function like display screen, mother board, display card and so on, and users can flexibly choose, purchase and assemble their required peripheral devices. In general, the peripheral devices are assembled by using the transmission interfaces with different specifications and connection wires with different inserting holes.

For example, computer systems of these days are often expanded computer system functions through the connection of the peripheral devices to an expansion card of Peripheral Component Interconnection Express (PCIe) specification. In the computer system, visual data are also transmitted to the display device to be displayed through the specifications of Video Graphics Array (VGA), digital visual interface (DVI), High Definition Multimedia Interface (HDMI), DisplayPort or the like. In addition, the input device of some of the computer systems like mouse, keyboard, etc. has its own PS/2 interface, and RJ45 of the normal inserting hole specification is also used in the internet cable.

Besides, if the peripheral devices are connected by using data transfer protocol of a daisy-chain connection property, each peripheral device is required to conform to a "one-input-one-output principle" so that the peripheral devices can be correctly connected to each other. Thus, each peripheral device has to have two daisy-chain connection ports due to the "one-input-one-output principle". However, if the locations of the connection ports on the peripheral devices are fixed, then the shape of connected peripheral devices will nearly be similar regardless of the change of the connection order. A user can hardly connect in his own choice and furthermore it has to conform to the one-input-one-output principle. Therefore, a simple switch device is provided so that each peripheral device can have multiple daisy-chain connection ports, whereas there are only one input connection port and one output connection port (i.e., two connection ports) under operation at the same time.

US 2006/0227759 A1 describes a peripheral sharing USB hub in which devices coupled to upstream ports may enumerate the USB switching hub according to the total number of downstream ports on the USB switching hub.

### SUMMARY OF THE INVENTION

The present invention provides an electric device having multiple data connection ports. The electric device uses the data connection ports located on a plurality of surfaces and can flexibly be connected and transfer data to another electric device having the data connection ports with the same specification.

The present invention provides an electric device having multiple connection ports. The electric device includes a body, a processing unit and a detecting switch unit. The body includes M surfaces and N data connection ports, wherein the N data connection ports are disposed on the M surfaces. M, N are positive integers and N is greater than or equal to 2. The processing unit includes a first interface control unit and a second interface control unit. The detecting switch unit is coupled to the first interface control unit, the second interface control unit and the data connection ports, and used to detect whether the data connecting ports are connected. While detecting that the i^{th} data connection port and the j^{th} data connection port are connected, the detecting switch unit assigns the i^{th} data connection port and the j^{th} data connection port to be controlled by the first interface control unit and the second interface control unit respectively, and disables the data connection ports other than the i^{th} data connection port and the j^{th} data connection port, wherein i and j are positive integers, i≠j and 1≦i, j≦N. The data connection ports, the first interface control unit and the second interface control unit conform to a data transfer protocol having a daisy-chain connection property.

According to one embodiment of the present invention, after detecting the i^{th} data connection port that is firstly connected, the detecting switch unit electrically connects the i^{th} data connection port to the first interface control unit. And after detecting the j^{th} data connection is secondly connected, the detecting switch unit electrically connects the j^{th} data connection port to the second interface control unit.

According to one embodiment of the present invention, the data transfer protocol can be a thunderbolt transmission specification or a small computer system interface (SCSI).

According to one embodiment of the present invention, the processing unit further includes a function operation unit. The function operation unit is coupled between the first interface control unit and the second interface control unit, and is used to execute at least one function of the electric device.

According to one embodiment of the present invention, the electric device further includes N light emitting units, with each light emitting unit corresponding to a different data connection port. When the connected data connection ports are not detected, or when only the connected i^{th} data connection port is detected, the detecting switch unit illuminates all the light emitting units. When the connected i^{th} data connection port and the connected j^{th} data connection port are detected, the detecting switch unit illuminates the light emitting units corresponding to the i^{th} data connection port and the j^{th} data connection port and extinguishes the rest of the light emitting units. Each light emitting unit may be disposed on its corresponding data connection port.

### BRIEF DESCRIPTION OF THE DRAWINGS

The accompanying drawings constituting a part of this specification are incorporated herein to provide a further understanding of the invention. Here, the drawings illustrate embodiments of the invention and, together with the description, serve to explain the principles of the invention.
Fig. 1A and 1B illustrate schematic views of an electric device having two data connection ports.
Fig. 2 illustrates a diagram of data transmission in a thunderbolt transmission specification.
Fig. 3 is a schematic view of an electric device having multiple data connection ports according to an embodiment of the present invention.
Fig. 4 illustrates a block diagram of an electric device having multiple data connection ports according to an embodiment of the present invention.

### DESCRIPTION OF EMBODIMENTS

Each of the computer hosts can be detached into a plurality of independent peripheral devices, and the peripheral devices can be connected and assembled to each other by using a common data transmission interface to obtain a complete computer system. Otherwise, by using the common data transmission interface, the manufacturers can design each of the peripheral devices into independent peripheral device with a fixed shape (for example, rectangular parallelepiped, pyramidal, conical, etc.), so that the users can assemble the connection shape and structure of the peripheral devices by themselves as they wish.

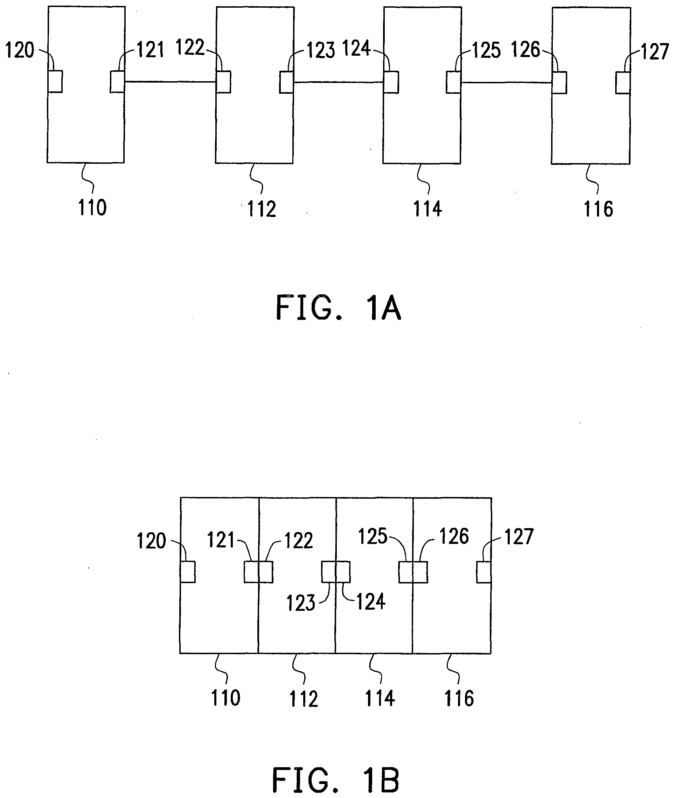

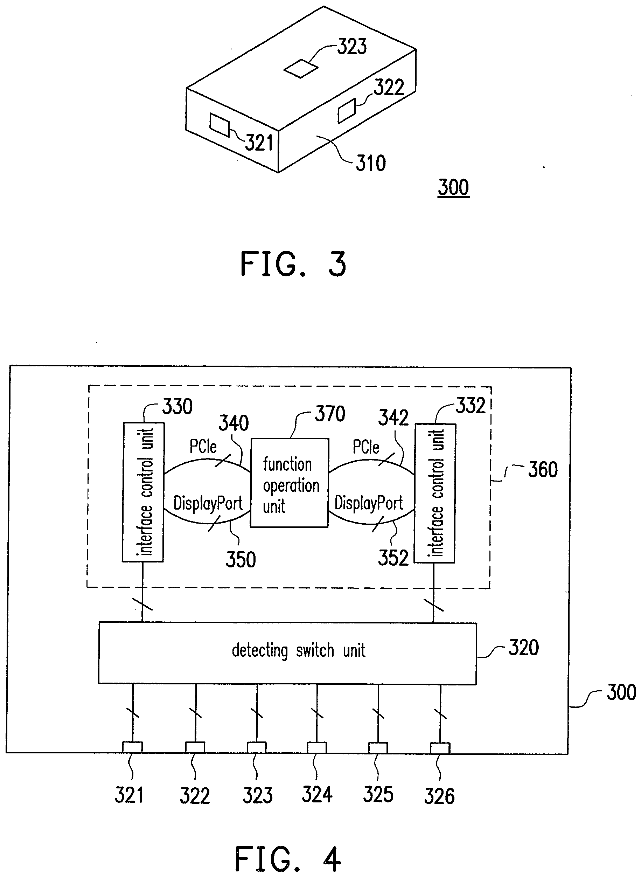

Fig. 1A and 1B illustrate schematic views of an electric device having two data connection ports. In the following embodiment of the present invention, all of the data transfer protocols to which the data connection ports and the interface control units conform have the property of daisy-chain connection interface. In other words, all the electric devices 110 to 116 and the electric device 300 in Fig. 3 conform to the "one-input-one-output principle".

As for the data transfer protocol that is commonly used and conforming to the daisy-chain connection property, a thunderbolt transmission specification is taken as an example in the embodiment. In addition, in other embodiments, the small computer system interface (SCSI) can also be used to realize the above mentioned data transfer protocol. The detail specification of the data transfer protocol is not limited to the present invention, and it only has to conform to the "one-input-one-output principle". Referring to Fig. 1A, in general, two data connection ports 120 to 127 that conform to the thunderbolt transmission specification will be disposed in each electric device 110 to 116, so that each electric device 110 to 116 can perform functions and rapidly transfer data to each other through the data connection ports 120 to 127.

For instance, the electric devices 110 and 112 transfer data to each other through the data connection ports 121 and 122. The electric device 110 can also perform the bidirectional transmission data to the electric devices 114 and 116 through the bridge connection of the electric device 112 and the data connection ports 121 to 126 that conform to the thunderbolt transmission specification.

However, since the electric devices 110 to 116 are connected by using the data transfer protocol of the daisy-chain connection property, it has to conform to the "one-input-one-output principle". In other words, each of electric devices 110 to 116 must have two data connection ports 120 to 127, and only two data connection ports can operate at the same time, wherein one is for input connection port and the other is for output connection port. Thus, once the configuration locations of two data connection ports 120 to 127 of each of the electric devices 110 to 116 are determined, the shape of the assembled electric devices 110 to 116 is fixed.

For example, since all the electric devices 110 to 116 are designed to be rectangular parallelepiped, the appearance of the assembled electric device is as shown in Fig. 1B. If multiple data connection ports are disposed in each of the electric devices and each data connection port corresponds to one interface controller that conforms to the specification, then the electric devices can operate only two data connection ports at the same time and the other data connection ports may seem redundant due to the series connection transmission method of the daisy-chain in the thunderbolt transmission specification.

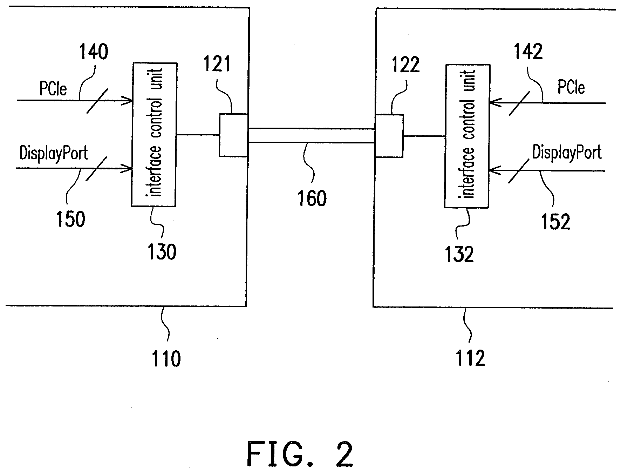

Herein the thunderbolt transmission specification is described. The thunderbolt transmission specification is a kind of data transmission interface developed by Intel Corporation. It can be used as a universal serial bus between the computer and other devices, and it also conforms to the one-input-one-output principle of the daisy-chain connection interface. Fig. 2 illustrates a diagram of data transmission in a thunderbolt transmission specification, and taking the electric devices 110 and 112 as an example. The thunderbolt transmission specification is integrated by the Peripheral Component Interconnect Express (PCIe) and DisplayPort so as to form a universal data transmission specification. In the present embodiment, both the data connection ports 121, 122 and the interface control unit 130, 132 conform to the thunderbolt transmission specification.

Referring to Fig. 2, in the electric device 110, after the PCIe bus 140 and the DisplayPort bus 150 respectively transmit the signal to the interface control unit 130, the interface control unit 130 integrates the two signals and transmits the integrated signal to the interface control unit 132 of another electric device 112 through the data connection ports 121, 122 and the thunder cable 160. After the interface control unit 132 receives the above mentioned signal, the interface control unit 132 divides the signal into two portions and transmits the signal to the PCIe bus 142 and DisplayPort bus 152 individually. Accordingly, the electric devices 110 and 112 can transfer digital signals and visual signals to each other.

Thus, the electric device can assign the connected data connection ports to the restricted quantity (e.g., two) of interface control units of the electric device by actively detecting whether each data connection port is connected. Additionally, when the corresponding data connection ports are assigned to both interface control units, the electric device disables the rest of the data connection ports, so as to use the data connection ports to flexibly connect the electric devices. Accordingly, the manufacturing cost can be saved and it can conform to the specification of daisy-chain connection interface, since it is unnecessary to dispose one interface control unit to each data connection port. Furthermore, the users can also enjoy the delights when the electric devices are assembled and the connection order of the electric devices can be changed as required.

Fig. 3 is a schematic view of an electric device 300 having multiple data connection ports according to an embodiment of the present invention. Fig. 4 illustrates a diagram of an electric device 300 having multiple data connection ports according to an embodiment of the present invention. Referring to Fig. 3 and Fig. 4 together, the electric device 300 includes a body 310, a processing unit 360 and a detecting switch unit 320. The body 310 includes M surfaces and N data connection ports, and the N data connection ports are disposed on the M surfaces, wherein M, N are positive integers and N is greater than or equal to 2.

As for the present embodiment, the body 310 of the electric device 300 is designed to be rectangular parallelepiped, and one of data connection ports 321 to 326 is individually disposed on each of the surfaces. In other words, both M and N are equal to 6 in the embodiment. However, the shape of the body 310 is not limited in the present invention, and furthermore the number of data connection ports is not limited thereto. That is, the body 310 of the electric device 300 can be designed to be cylindrical, pyramidal, spherical or the like. Each surface of the body 310 can be disposed one or more data connection ports 321 to 326, or some surfaces can also be disposed no data connection port. Accordingly, N data connection ports can be disposed on M surfaces as required in the embodiment, and the quantity of the data connection ports is preferred to be greater than or equal to 2 so as to comply with the spirit of the present invention.

The processing unit 360 includes the interface control unit 330 and the interface control unit 332. The data connection ports 321 to 326 and the interface control units 330, 332 conform to the thunderbolt transmission specification. In other words, the interface control units 330, 332 can be thunder controllers. In addition, in the embodiment, the processing unit 360 further includes a function operation unit 370. The function operation unit 370 is coupled between the interface control unit 330 and the interface control unit 332.

The function operation unit 370 is described as follows: The electric device 300 herein can be a peripheral device of a computer system, or other electric device that can be connected to the computer system. For example, the electric device 300 can be a display device like a flat display device, a projector etc.; a storage device like external hard drive etc.; an output device like audio device, printer etc.; an input device like keyboard, mouse etc.; or an operation device like center processing unit etc. Therefore, the function operation unit 370 can be the controller of the plurality of electric peripheral elements or the processing devices. The function operation unit 370 can receive and transmit signals through the PCIe bus 340, 342 and DisplayPort 350, 352 of the interface control unit 330, 332 so as to execute the functions that the electric device 300 should have.

The detecting switch unit 320 is coupled to the interface control unit 330, the interface control unit 332 and the data connection ports 321 to 326. The detecting switch unit 320 is used to actively detect the data connection ports 321 to 326 of the electric device 300, so as to determine whether the data connection ports 321 to 326 are connected to other electric devices having the data connection ports conforming to the thunderbolt transmission specification.

The enabling method of the detecting switch unit 320 is described as follows: Since only two interface control units 330, 332 are used in data transmission and function realization in the embodiment, the data connection ports 321 to 326 are connected to the detecting switch unit 320 at the same time, so that the detecting switch unit 320 can simultaneously detect whether the data connection ports 321 to 326 are connected with other electric devices.

In other words, while detecting two of the data connection ports are connected, e.g., the i^{th} data connection port and the j^{th} data connection port, wherein i and j are positive integers, i≠j and 1≦i, j≦N, the detecting switch unit 320 assigns the i^{th} data connection port and the j^{th} data connection port to be controlled by the interface control unit 330 and the interface control unit 332 respectively. Thus, the two electric devices corresponding to the two connected data connection ports can be connected to each other to form a connection route. In addition, the detecting switch unit 320 just allows two connected data connection ports at most to connect to each other to form a connection route, and there is no other interface control unit for providing the connection and signal processing. Thus, the detecting switch unit 320 disables the data connection ports other than the i^{th} data connection port and the j^{th} data connection port for disconnecting.

For example, after the data connection port 322 and a thunder cable are connected, the detecting switch unit 323 will detect the firstly connected data connection port 322 and electrically connect the data connection port 322 to the interface control unit 330, so that the data connection port 322 is controlled by the interface control unit 330. The function operation unit 370 of the electric device 300 can also perform the data transmission to the electric device connected to the other terminal of the thunder cable through the interface control unit 330, the detecting switch unit 320 and the data connection port 322.

Then, if the data connection port 325 of the electric device 300 and another thunder cable are connected, the detecting switch unit 323 will detect the second connected data connection port 325 and electrically connect the data connection port 325 to the interface control unit 332, so that the data connection port 325 is controlled by the interface control unit 332. Accordingly, the function operation unit 370 of the electric device 300 can perform the data transmission to the electric device connected to the other terminal of the thunder cable through the interface control unit 332, the detecting switch unit 320 and the data connection port 325. Moreover, the electric device connected to the data connection port 325 can also transfer data with the electric device connected to the data connection port 322 through the bridge connection of the electric device 300.

Additionally, since there is no other interface control unit to provide the connection and signal processing, the detecting switch unit 320 disables the other data connection ports having no connection, for example, data connection ports 321, 323, 324 and 326, for disconnecting. Thus, even though the rest of thunder cables can connect with the data connection ports 321, 323, 324 and 326, it is impossible to form a connection route with other electric devices.

Accordingly, the detecting switch unit 320 of the embodiment can be implemented with an integrated circuit (IC) having the function mentioned in the embodiment. Or the user can also use a plurality of switching units to switch on/off the circuit for implementing the detecting switch unit 320.

In other embodiments, the user can also dispose N light emitting units (e.g., N = 6) on the electric device 300, so as to display the enabling status of each data connection port. In other words, each light emitting unit can be disposed on each data connection port 321 to 326, and the light emitting units are, for example, white light emitting diodes. When the connected data connection ports 321 to 326 are not detected by the detecting switch unit 320, the detecting switch unit 320 lightens all of the light emitting units, so that the user can know all of the data connection ports 321 to 326 can be used. In other words, when in the initial status of the electric device 300 and none of the data connection ports 321 to 326 is connected to other electric device, all of the light emitting units are lightened.

When the detecting switch unit 320 detects only the i^{th} data connection port (e.g., data connection port 322) is connected, the detecting switch unit 320 will also lighten all of the light emitting units. When the detecting switch unit 320 detects the two i^{th} and j^{th} data connection ports are connected (e.g., the data connection ports 322 and 325 are connected), the detecting switch unit 320 will just lighten the light emitting units corresponding to the i^{th} and j^{th} data connection ports and darken the rest of the light emitting units. Thus, it can remind the user that the other data connection ports 321, 323, 324 and 326 are disabled and in an invalid status, and it will not work though the electric device is inserted to the invalid connection port.

After two connected data connection ports are connected, if the user removes the thunder cable of one of the data connection port (e.g., remove the thunder cable of the data connection port 322), the detecting switch unit 320 will lighten all of the light emitting units again until the detecting switch unit 320 detects that a thunder cable is inserted into another data connection port.

In light of the foregoing, the electric device 300 of the present invention has a plurality of surfaces and one or more data connection ports 321 to 326 can be disposed on each of the surfaces. The electric device 300 uses the detecting switch unit 320 to detect whether the data connection ports 321 to 326 are connected, so as to execute data transmissions and perform functions through the restricted quantity of interface control units 330, 332. After two of the data connection ports are connected, the detecting switch unit will disable the other data connection ports that are not connected immediately.

Accordingly, the manufacturing cost can be saved since it is unnecessary to dispose one interface control unit to each data connection port 321 to 326. The electric device 300 can also be connected with other electric devices through the different surface of the body, so that the users can enjoy the delights when the electric devices are assembled. Furthermore, the user can design the connection order and structure of the electric devices as required, so as to increase the diversity of the shape change after assembly.

## Claims

1. An electric device (300) having multiple data connection ports (321-326), comprising:
a body (310) comprising M surfaces and N data connection ports (321-326), wherein the N data connection ports (321-326) are disposed on the M surfaces, M, N are positive integers and N is greater than or equal to 2;
a processing unit (360) comprising a first interface control unit (330) and a second interface control unit (332); and
a detecting switch unit (320) coupled to the first interface control unit (330), the second interface control unit (332) and the data connection ports (321-326), and used to detect whether the data connecting ports (321-326) are connected, and, while detecting that the i^{th} data connection port and the j^{th} data connection port are connected, the detecting switch unit (320) assigning the i^{th} data connection port and the j^{th} data connection port to be controlled by the first interface control unit (330) and the second interface control unit (332) respectively, and disabling the data connection ports other than the i^{th} data connection port and the j^{th} data connection port, wherein i and j are positive integers, i≠j and 1≦i, j≦N ; and
wherein the data connection ports (321-326), the first interface control unit (330) and the second interface control unit (332) conform to a data transfer protocol having a daisy-chain connection property.

2. The electric device (300) as claimed in claim 1, wherein, after detecting the i^{th} data connection port that is firstly connected, the detecting switch unit (320) electrically connects the i^{th} data connection port to the first interface control unit 330, and after detecting the j^{th} data connection port is secondly connected, the detecting switch unit (320) electrically connects the j^{th} data connection port to the second interface control unit (332).

3. The electric device (300) as claimed in claim 1, wherein the data transfer protocol is a thunderbolt transmission specification or a small computer system interface (SCSI).

4. The electric device (300) as claimed in claim 1, wherein the processing unit (360) further comprises:
a function operation unit (370) coupled between the first interface control unit (330) and the second interface control unit (332), and used to execute at least one function of the electric device (300).

5. The electric device as claimed in claim 1, further comprising:
N light emitting units, each light emitting unit corresponding to a different data connection port (321-326),
wherein when the data connection ports (321-326) are not detected as connected, or when only the i^{th} data connection port is detected as connected, the detecting switch unit (320) illuminates all the light emitting units, and when the connected i^{th} data connection port and the connected j^{th} data connection port are detected, the detecting switch unit (320) illuminates the light emitting units corresponding to the i^{th} data connection port and the j^{th} data connection port and extinguishes the rest of the light emitting units.

6. The electric device (300) as claimed in claim 5, wherein each light emitting unit is disposed on its corresponding data connection port (321-326).

## Patentansprüche

1. Ein elektrisches Gerät (300) mit mehreren Daten-Verbindungsanschlüssen bzw. V-Ports (321-326) bestehend aus :
Einem Körper (310) mit M Oberflächen und N Daten-V-Ports (321-326) wobei sich diese N Daten-V-Ports (321-326) auf den M Oberflächen befinden, M, N positive Integers/Ganzzahlen sind und N gleich oder größer als 2 ist;
Einer Verarbeitungseinheit (360) bestehend aus einer ersten Schnittstellenregler-Einheit (330) und einer zweiten Schnittstellenregler-Einheit (332) ; und
Einer Erfassungsschalter-Einheit (320) welche mit der ersten Schnittstellenregler-Einheit (330), der zweiten Schnittstellenregler-Einheit (332),
und N Daten-V-Ports (321-326) zusammengelegt ist zwecks Prüfung, ob die Daten-V-Ports (321-326) verbunden sind, bei gleichzeitiger Prüfung der bestehenden Verbindung zwischen dem i^{th} und j^{th} Daten-V-Ports, weiterhin die Erfassungsschalter-Einheit (320) mit Anweisung an die i^{th} und j^{th} Daten-V-Ports der Steuerung der ersten (330) bzw. zweiten (332) Schnittstellenregler-Einheit zu folgen, sowie die Daten-V-Ports außerhalb der i^{th} und j^{th} Daten-V-Ports stillzulegen, wobei i und j positive Integers sind, i≠j und 1 ≦i, j≦N ; und
indem die Daten-V-Ports (321-326), die erste Schnittstellenregler-Einheit (330) und zweite Schnittstellenregler-Einheit (332) mit einem
Datenübertragungsprotokoll mit Weiterschleifung/Daisy Chain-Verbindungseigenschaft übereinstimmen.

2. Ein elektrisches Gerät (300) gemäß Anspruch 1, wobei nach Erfassung des zuerst verbundenen Daten-V-Ports, die Erfassungsschalter-Einheit (320) den i^{th} Daten-V-Port zur ersten Schnittstellenregler-Einheit (330) verbindet und nach dessen Erfassungung der zweite j^{th} Datenverbindungs-Port verbunden wird, beginnt nun die Erfassungsschalter-Einheit (320) den j^{th} V-Port elektrisch zur zweiten Schnittstellenregler-Einheit zu verbinden. (332).

3. Das elektrische Gerät (300) gemäß Anspruch1, wobei das Datentransfer-Protokoll eine Thunderbolt-spezifische Übertragung oder eine kleine Komputersystem-Schnittstelle (SCSI) darstellt.

4. Das elektrische Gerät (300) gemäß Anspruch1, wobei die Datenverarbeitungs-Einheit (360) weiterhin umfasst:
Ein zwischen einer ersten (330) und zweiten (332) Schnittstellenregler-Einheit bestehenden Funktionsoperation-Einheit (370) zwecks Ausführung von mindestens einer Funktion des elektrischen Gerätes (300).

5. Das elektrische Gerät (300) gemäß Anspruch1, weiterhin umfasst :
N lichtabgebende Einheiten wobei jedes Licht verschiedenen Daten-V-Ports zugeordnet (321-326) ist,
indem falls die Daten-V-Ports (321-326) nicht als verbunden erkannt werden oder wenn nur der i^{th} Daten-V-Port als verbunden erkannt wird, die Erfassungsschalter-Einheit (320) alle lichtabgebenden Einheiten illuminiert,
und wenn der verbundene i^{th} V-Port und j^{th} V-Port gefunden sind, der Erfassungsschalter (320) die entsprechenden lichtabgebenden Einheiten mit Hinblick auf den i^{th} V-Port sowie j^{th} V-Port und den Rest der lichtabgebenden Einheiten löscht.

6. Das elektrische Gerät (300) gemäß Anspruch 5, wobei jede lichtabgebende Einheit in ihrem jeweiligen Daten-V-Port eingebettet (321-326) ist.

## Revendications

1. Un dispositif électrique (300) présentant de multiples ports de connexion de données (321-326), comprenant :
un corps (310) comprenant M surfaces et N ports de connexion de données (321-326), dans lequel les N ports de connexion de données (321-326) sont disposés sur les M surfaces, M, N sont des entiers positifs et N est supérieur ou
égal à 2 ;
une unité de traitement (360) comprenant une première unité d'interface de commande (330) et une seconde unité d'interface de commande (332) ; et
une unité de détection de commutateur (320) couplée à la première unité d'interface de commande (330), la seconde unité d'interface de commande (332) et les ports de connexion de données (321-326) et utilisée pour détecter si oui ou non les ports de connexion de données (321-326) sont connectés, et,
tout en détectant que le i^{ème} port de connexion de données et le j^{ème} port de connexion de données sont connectés, l'unité de détection de commutateur (320) attribuant le i^{ème} port de connexion de données et le j^{ème} port de connexion de données devant être contrôlés par la première unité d'interface de commande (330) et la seconde unité d'interface de commande (332) respectivement et désactivant les ports de connexion de données autres que le i^{ème} port de connexion de données et le j^{ème} port de connexion de données, dans laquelle i et j sont des entiers positifs, i ≠ j et 1 ≦i, j≦N ; et
dans laquelle les ports de connexion de données (321-326), la première unité d'interface de commande (330) et la seconde unité d'interface de commande (332) sont conformes à un protocole de transfert de données présentant une propriété de connexion en série.

2. Le dispositif électrique (300), tel que revendiqué dans la revendication 1, dans lequel après la détection du i^{ème} port de connexion de données qui est connecté en premier, l'unité de détection de commutateur (320) connecte électriquement le j^{ème} port de connexion de données à la première unité d'interface de commande (330) et après la détection du j^{ème} port de connexion de données est ensuite connecté en second, l'unité de détection de commutateur (320) connecte électriquement le j^{ème} port de connexion de données à la seconde unité d'interface de commande (332).

3. Le dispositif électrique (300) selon la revendication 1, dans lequel le protocole de transfert de données est une spécification de transmission Thunderbolt ou une interface pour petits systèmes informatiques (SCSI).

4. Le dispositif électrique (300), tel que revendiqué dans la revendication 1, dans lequel l'unité de traitement (360) comprend en outre :
une unité d'exploitation de fonction (370) couplée entre la première unité d'interface de commande (330) et la seconde unité d'interface de commande (332) et
utilisée pour exécuter au moins une fonction du dispositif électrique (300).

5. Le dispositif électrique comme revendiqué dans la revendication 1 comprenant en outre :
N unités d'émission de lumière, chaque unité d'émission de lumière correspondant à un port de connexion de données différent (321-326),
dans lequel lorsque les ports de connexion de données (321-326) ne sont pas détectés comme étant connectés ou lorsque seul le i^{ème} port de connexion de données est détecté comme étant connecté, l'unité de détection de commutateur (320) éclaire toutes les unités d'émission de lumière et lorsque le i^{ème} port de connexion de données et le j^{ème} port de connexion de données sont détectés, l'unité de détection de commutateur (320) éclaire les unités d'émission de lumière correspondant au i^{ème} port de connexion de données et au j^{ème} port de connexion de données et éteint le reste des unités d'émission de lumière.

6. Le dispositif électrique (300) selon la revendication 5, dans lequel chaque unité d'émission de lumière est disposée sur son port de connexion de données correspondant (321-326).
